# EUROPÄISCHE PATENTANMELDUNG

(11) **EP 1 589 774 A1**
(43) Veröffentlichungstag der Anmeldung: **26.10.2005**
(21) Anmeldenummer: 05005836.1
(22) Anmeldetag: 17.03.2005
(51) Int. Cl.: H04Q 7/34

(54) **Verfahren und Anordnung zum Testen von Komponenten eines drahtlosen Kommunikationssystems**

(30) Priorität: 18.03.2004 DE 102004013706; 25.06.2004 DE 102004030903
(71) Anmelder: Signalion GmbH, 01099 Dresden (DE)
(72) Erfinder: Stege, Matthias, Dr.-Ing., 01099 Dresden (DE); Hentschel, Tim, Dr.-Ing., 01127 Dresden (DE); Fettweis, Gerhard, Prof. Dr.-Ing., 01324 Dresden (DE); Henker, Matthias, Dr.-Ing., 01187 Dresden (DE); Schäfer, Frank, Dipl.-Ing., 01705 Freital (DE); Dräger, Thorsten, Dipl.-Ing., 01069 Dresden (DE)
(74) Vertreter: Lippert, Stachow & Partner

(57) **Zusammenfassung**

Der Erfindung, welche eine Anordnung zum Testen von Komponenten eines drahtlosen Kommunikationssystems mit einer Standard-Computer-Hardware und einer Teststrecke betrifft, liegt die Aufgabe zugrunde, eine Möglichkeit zu schaffen, zu verschiedenen Entwicklungsstufen Komponenten eines drahtlosen Kommunikationssystems, welches auch ein Mehrantennensystem sein kann, realitätsnah zu testen um damit kostenintensive Fehlentwicklungen zu vermeiden. Gemäß der Erfindung wird die Aufgabe anordnungsseitig dadurch gelöst, dass die Teststrecke einen Transmitter und einen Receiver umfasst, die als elektronische Schaltungen ausgebildet und drahtlos miteinander kommunizierend verbunden sind und die mit Interfaces versehen sind, dass die Standard-Computer-Hardware als Personal Computer mit Standardinterfaces ausgebildet ist und das Interface des Transmitters und dass das Interface des Receivers mit den Standardinterfaces verbunden sind.

## Beschreibung

Die Erfindung betrifft eine Anordnung zum Testen von Komponenten eines drahtlosen Kommunikationssystems mit einem Simulationsrechner und einer Teststrecke.

Die Erfindung betrifft auch ein Verfahren zum Testen von Komponenten eines drahtlosen Kommunikationssystems, bei dem Daten über eine Teststrecke gesendet und empfangen werden und aus den empfangenen Daten im Vergleich zu den gesendeten Daten mittels eines Simulationsrechners ein Testergebnis ermittelt wird.

Komponenten eines drahtlosen Kommunikationssystems sind alle Soft- oder Hardware-Bausteine, die an der Kommunikation direkt oder indirekt beteiligt sind. Jede Komponente nimmt damit Einfluss auf die Kommunikation und beeinflusst deren Qualität. Um die verschiedensten Einflussgrößen der einzelnen Komponenten in ihrer Gesamtfunktion zu erfassen, ist es erforderlich, diese zu testen und das Testergebnis qualitativ zu bewerten.

Ein Großteil der Komponenten ist auf Chips angeordnet oder in diesen implementiert, insbesondere bei sogenannten On-Chip-Systemen.

Bei der Chip-Entwicklung für die Kommunikationstechnik werden eine Vielzahl von Stufen durchlaufen, bis ein funktionsfähiger Prototyp des Chips vorliegt. Die Entwicklung ist ein langwieriger Prozess, der immer mit Fehlern, insbesondere durch das nicht richtige, unvorhersehbare Zusammenarbeiten der Komponenten behaftet ist und so erneute Entwicklungsdurchläufe notwendig sind.

Im Allgemeinen erfolgt zunächst eine Vorentwicklung in Blockschaltbildern, der eine Simulation mit Software folgt. Schon hier treten viele unerkannte Fehler auf. Dem vorliegenden theoretischen Modell folgt die Entwicklung der Hardware-Architektur und die Implementierung bis ein Prototyp als Chip oder Chipsatz mit Software vorliegt, der dann geprüft und getestet wird. Die Herstellung eines solchen Chips als Funktionsmuster ist sehr teuer und zeitaufwändig. Bis zum funktionsfähigen Prototyp sind mehrere Durchläufe nicht unüblich, was eine Multiplikation der Kosten mit sich bringt.

Daher werden häufig Prototypen und Demonstratorsysteme aufgebaut, welche die Funktionsweise des Chips mit marktüblichen Signal Processing Cards emulieren.

Solche Signal Processing Cards, die mit digitalen Signalprozessoren (DSP = Digital Signal Processor) oder auch in Mischformen mit Feld-programmierbaren Gate Arrays (FPGA = field programmable gate array) bestückt sind können häufig nur einen kleinen Teilbereich des Gesamtsystems abbilden.

Im Bereich der drahtlosen Kommunikationssysteme gewinnen Mehrantennensysteme, sogenannte MIMO-Systeme (MIMO = Multiple-Input Multiple-Output) zunehmend an Bedeutung. Mittels derartiger Systeme ist es möglich den effektiven Datendurchsatz zu steigern und die Bitfehlerrate zu minimieren. Zur Simulation eines MIMO-Algorithmus sind derzeit verfügbare SignalProzessor-Boards, wegen der durch das System bedingten Komplexität, nicht geeignet.

Aus der WO 03/069814 sowie der US 2003/0236089 ist ein Simulator für mobile Anschlussgeräte (Terminals) im Zusammenhang mit einem drahtlosen Netzwerk bekannt. Dabei werden Basisstationen während einer Kanalbeeinflussung bei der Basisbandverarbeitung getestet. Diese Lösung ist speziell auf zellulare Kommunikations-Netzwerke ausgelegt und somit für eine stufenweise Prototypenentwicklung für andere drahtlose Kommunikationssysteme ungeeignet.

Der Erfindung liegt somit die Aufgabe zugrunde, eine Möglichkeit zu schaffen, zu verschiedenen Entwicklungsstufen Komponenten eines drahtlosen Kommunikationssystems, welches auch ein Mehrantennensystem sein kann, realitätsnah zu testen um damit kostenintensive Fehlentwicklungen zu vermeiden.

Anordnungsseitig wird die Aufgabe dadurch gelöst, dass die Teststrecke einen Transmitter und einen Receiver umfasst, die als elektronische Schaltungen ausgebildet und drahtlos miteinander kommunizierend verbunden sind und die mit Interfaces versehen sind, dass die Standard-Computer-Hardware als Personal Computer mit Standardinterfaces ausgebildet ist und dass das Interface des Transmitters und das Interface des Receivers mit den Standardinterfaces verbunden sind.

Mittels dieser Lösung kann eine, die Simulation steuernde und auf einem Personal Computer lauffähige, Simulationssoftware für drahtlose Kommunikationssysteme Simulationsdaten über eine Standardschnittstelle an eine Sender- und eine Empfängerhardware übermitteln und erhalten. Diese sind mit einer oder mehreren angeschlossene Antennen ausgestattet und ermöglichen somit eine realitätsgetreue Datenübertragung über die Luft. Als Standardschnittstellen wird beispielsweise USB oder Firewire genutzt.

In einer besonderen Ausführung der Erfindung ist vorgesehen, dass der Transmitter ein Interface, eine Signalverarbeitungseinheit mit einem Speicher und mindestens Elemente für einen Sende/Empfangskanal, bestehend aus Digital/Analog-Umsetzer, Modulator, Verstärker und Antenne, und der Receiver ein Interface, eine Signalverarbeitungseinheit mit einem Speicher und mindestens Elemente für einen Sende/Empfangskanal, bestehend aus Antenne, Verstärker, Demodulator und Analog/Digital-Umsetzer, aufweist.

Sowohl der Transmitter als auch der Receiver sind jeweils mit einem Signalprozessor zur Steuerung eines Sende- oder Empfangskanals ausgestattet, welcher mit einem Speicher verbunden ist.

In einer weiteren Ausführung der Erfindung ist vorgesehen, dass Transmitter und Receiver über mindestens zwei Sende/Empfangskanäle kommunizierbar ausgebildet sind.

Durch eine Ausgestaltung des Transmitters und Receivers mit zwei oder mehr Sende- oder Empfangskanälen ist die Möglichkeit der Simulation von Mehrantennensystemen realisiert.

In einer anderen Ausführung der Erfindung ist vorgesehen, dass die Signalverarbeitungseinheit des Transmitters und/oder die Signalverarbeitungseinheit des Receivers eine frei programmierbare Logik enthält.

In einer anderen Ausführungsform der Erfindung ist vorgesehen, dass die Signalverarbeitungseinheit des Transmitters und/oder die Signalverarbeitungseinheit des Receivers einen digitalen Signalprozessor enthält.

In einer weitern Ausführung der Erfindung ist vorgesehen, dass die Signalverarbeitungseinheit des Transmitters und/oder die Signalverarbeitungseinheit des Receivers einen Mikroprozessor enthält.

In einer weitern Ausführungsform der Erfindung ist vorgesehen, dass die Signalverarbeitungseinheit des Transmitters und/oder die Signalverarbeitungseinheit des Receivers einen ASIC (ASIC = Aplication Specific Integrated Circuit) enthält.

Die Signalverarbeitungseinheit des Transmitters kann beispielsweise durch eine frei programmierbare Logik (FPGA = Field-Programmable Gate Array), einen digitalen Signalprozessor (DSP = Digital Signal Processing), einen Mikroprozessor (MC = Microcontroller), einen ASIC (ASIC = Application Specific Integrated Circuits) oder eine Kombination aus diesen Möglichkeiten gebildet werden.

In einer Ausgestaltung der Erfindung ist vorgesehen, dass Transmitter und Receiver auf je einer oder mehreren separaten Leiterplatten angeordnet sind.

In einer Ausgestaltungsform der Erfindung ist vorgesehen, dass Transmitter und Receiver auf einer gemeinsamen Leiterplatte angeordnet sind.

Die Hardwarerealisierung der Transmitter- und Receiverbaugruppe kann gemeinsam auf einer oder getrennt auf zwei verschiedenen Leiterplatten erfolgen. Somit kann eine Anpassung der Simulationshardware an verschiedene Fertigungs- und/oder Kundenanforderungen erfolgen.

Verfahrensseitig wird die Aufgabe dadurch gelöst, dass von der Standard-Computer-Hardware die zu sendenden Daten generiert und aus diesen mittels eines Transmitters Sendesignale erzeugt werden, die über eine atmosphärische Übertragungsstrecke gesendet und mittels eines Receivers als Empfangssignale empfangen und der Standard-Computer-Hardware als empfangene Daten übergeben werden.

Für einen Simulationsablauf wird ein Modell eines drahtlosen Kommunikationssystems mittels einer Simulationssoftware, wie beispielsweise "Matlab", "SIMULINK" oder "CoCentric System Studio", nachgebildet. Die von der Simulationssoftware im Simulationsablauf zu sendenden Daten werden zu einem Transmitter übertragen, welcher aus diesen ein Sendesignal erzeugt. Dieses Sendesignal kann in einem oder in mehreren Sendekanälen, beispielsweise für ein Mehrantennensystem, erzeugt werden. Das von der oder den Antennen abgestrahlte Sendesignal wird über eine reale Übertragungsstrecke (Luft) übertragen und von der oder den Empfangsantennen eines zur Simulationsanordnung gehörigen Receivers empfangen. Nach einer entsprechenden Verarbeitung des Empfangssignals im Receiver werden die empfangenen Daten der Simulationssoftware zugeführt und von dieser verarbeitet. Im Ergebnis dieser Verarbeitung kann beispielsweise eine Aussage über die Qualität der Datenübertragung, gekennzeichnet durch die Bitfehlerrate getroffen werden.

In einer besonderen Ausführung der Erfindung ist vorgesehen, dass die zu testenden Komponenten zumindest teilweise in der Standard-Computer-Hardware simuliert werden.

In einer weiteren Ausführung der Erfindung ist vorgesehen, dass die Komponenten zumindest teilweise auf der Transmitter-und/oder Receiver-Hardware implementiert werden.

Das erfindungsgemäße Verfahren ermöglicht den Simulationsablauf in verschiedenen Stufen. In einer ersten Stufe wird der Simulationsablauf nur innerhalb der Simulationssoftware realisiert. In nachfolgenden Stufen werden die Funktionen des zu erstellenden Prototyps Schritt für Schritt durch die flexibel skalierbare Simulationshardware abgebildet und getestet. So wird beispielsweise in einer Stufe der Simulation der Übertragungskanal nicht mehr simuliert, sondern durch eine reale Sender-Antenne-Übertragungsstrecke-Antenne-Empfänger Anordnung abgebildet und somit eine den späteren Bedingungen entsprechende Simulationsanordnung bereitgestellt. Nach mehreren Simulationsstufen, in denen immer mehr Funktionen durch die Prototypenhardware übernommen werden, entsteht somit ein voll funktionsfähiger Prototyp.

In einer weiteren Ausführungsform der Erfindung ist vorgesehen, dass ein Personal Computer als Standard-Computer-Hardware eingesetzt wird, dessen Standardinterfaces von dem Personal Computer derart getrieben werden, dass ein Datenaustausch zwischen Transmitter und Personal Computer und zwischen Receiver und Personal Computer über diese Standardschnittstellen erfolgt.

Die Simulationssoftware für die Simulation des drahtlosen Kommunikationssystems kann beispielsweise auf einem Personal Computer laufen. Gemäß dem Stand der Technik verfügt dieser über mehrere Standardschnittstellen, wie beispielsweise die parallele-, die serielle-, die USB- und die Fireware-Schnittstelle. Diese Schnittstellen können bei der Simulation genutzt werden, um die Prototypenhardware, beispielsweise aus der Transmitter-, Receiver- und Antennenbaugruppe oder Teilbaugruppen dieser Systeme bestehend, mit dem Personal Computer zu verbinden. Über diese Schnittstelle werden Simulationsdaten zur Hardware gesendet und empfangen.

Durch die Erfindung wird eine Komplettlösung für das Gesamtsystem aus Transmitter, Receiver und Übertragungskanal geschaffen. Erfindungsgemäß wird eine komplette Hardware-Plattform aus flexiblen Standard-Bausteinen, also aus DSPs und FPGAs, gegebenenfalls auch mit ASICs (ASIC = Application Specific Integrated Circuit) oder mit Microcontroller oder Microprozessor - falls notwendig - aufgebaut.

Mit DSPs ist der Aufbau eines Transmitters oder Receivers möglich. Der DSP ist sehr flexibel programmierbar und verwendbar.

FPGAs besitzen Eigenschaften welche denen von Cisp schon sehr ähnlich sind, sind jedoch ähnlich wie DSPs frei programmierbar. Die Implementierungen sind oft effizienter.

Transmitter und Receiver bestehen aus einem Analogteil und einem Digitalteil. Über die Interface-Einheiten sind Transmitter und Receiver mit dem den Überstragungskanal simulierenden Computer verbunden.

Mit der erfindungsgemäßen Hardware-Plattform liegt von Anfang an ein hardwaremäßig funktionsfähiges Modell nahe der Realität vor. Die Plattform hat die Eigenschaft, dass sie für die Nachbildung der vielfältigen Entwicklungen in der Kommunikationstechnik ausreichend flexibel ist und die Möglichkeiten bietet, bei der Chip-Entwicklung, ausgehend von der Antennenseite des Senders oder Empfängers, stufenweise (z.B. bei drei Algorithmenblöcken) die "sicheren", idealer Weise völlig fehlerfreien Teile oder Blöcke zu einem sicheren Teilbereich der Hardware-Plattform zuzuordnen und diesen Bereich schrittweise immer weiter zu vergrößern.

Die Vorteile der Erfindung sind
- eine erhebliche Verkürzung der Entwicklungszeit,
- eine erhebliche Kostenersparnis bei der Entwicklung von Kommunikationsgeräten,
- das Vorliegen eines hardwaremäßigen Modells in der Hardware-Plattform von Anfang der Entwicklung an und
- in der Möglichkeit einer schrittweisen Entwicklung des Chips mit sicheren, fehlerfreien Teilbereichen
zu sehen.

Die Erfindung soll nachfolgend anhand eines Ausführungsbeispieles näher erläutert werden. In den zugehörigen Zeichnungen zeigt
- Fig. 1: einen Ablauf eines Design-Flusses bei der Gestaltung eines drahtlosen Kommunikationssystemes nach dem Stand der Technik,
- Fig. 2: eine schematische Darstellung der Herstellung von Prototypen von Komponenten von drahtlosen Kommunikationssystemen unter Nutzung der Erfindung,
- Fig. 3: eine erfindungsgemäße Anordnung in der Form einer Hardware-Plattform,
- Fig. 4: eine erfindungsgemäße Anordnung einer Dual Channel Card (SDCxC),
- Fig. 5: eine erfindungsgemäße Anordnung einer Master Card (SMC) und
- Fig. 6: eine erfindungsgemäße Anordnung einer Senderbaugruppe (SRFC-Tx), einer Empfängerbaugruppe (SRFC-Rx) und einer kombinierten Sender-/Empfängerbaugruppe (SRFC).

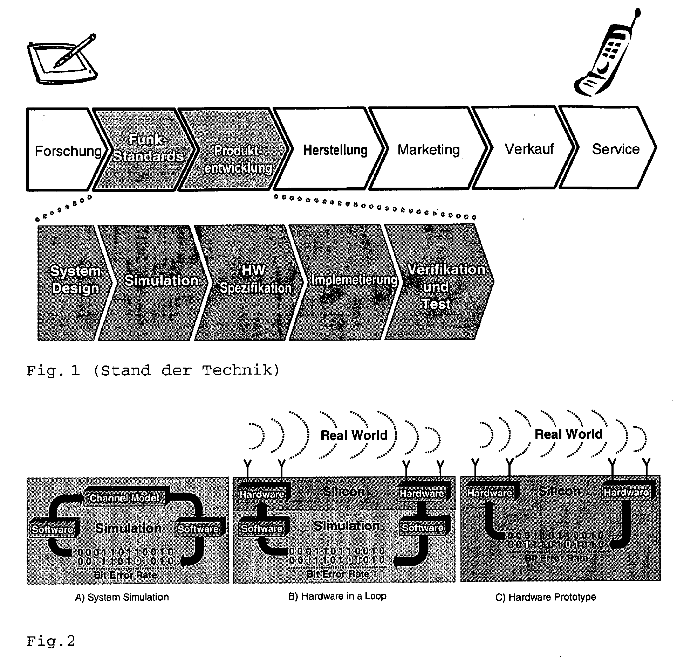

Wie in Fig. 1 dargestellt, beginnt die Entwicklung eines drahtlosen Kommunikationssystems im Allgemeinen mit einer Algorithmus-Design-Stufe, gefolgt von einer SoftwareSimulation des vorgeschlagenen Algorithmus. Das ermöglicht eine erste Abschätzung des Verhaltens unter definierten Testbedingungen.

Weitere Schritte der Gestaltung sind auf das Chip-Design gerichtet. Nachdem der Prototyp hergestellt wurde, kann die Prüfung und das Testen des Systems durchgeführt werden. Dies führt in den meisten Fällen zu einem so genannten Re-Design, wenn einige Merkmale oder Anforderungen nicht erreicht werden. In der Praxis sind mehrere Re-Designs notwendig, was zu einer Erhöhung der Kosten und zu einer Verzögerung bei der Vermarktung führt.

Viele Re-Designs resultieren aus Fehlern innerhalb der ersten Algorithmus-Design-Stufe und der nachfolgenden Simulation des Algorithmus. Derartige Simulationen basieren beispielsweise auf idealisierten Annahmen und bieten nur eine unvollständige System-Ansicht, verglichen mit einem realen drahtlosen Kommunikationssystem. Somit können einige Auswirkungen nichtidealer Systembedingungen nicht oder nicht vollständig eingeschätzt werden. Beispiele hierfür sind:
- Das getrennte Design der Basisbandbaugruppe und der HF-Baugruppe (HF-Baugruppe = analoge Hochfrequenz Bauelemente) berücksichtigt die Beeinflussung beider Baugruppen aufeinander nicht.
- Für die Simulation der Signalausbreitung wird ein, vom realen Ausbreitungsszenario abweichendes, Kanalmodell genutzt. Somit kommt es bei nachfolgen Tests des Prototyp unter realen Ausbreitungsbedingungen zu Abweichungen beispielsweise bei der Empfangssignalqualität und Datenübertragungsrate.
- Durch Änderungen von Standards, die sich auf die Eigenschaften des drahtlosen Kommunikationssystems, beispielsweise auf dessen Betriebsarten, auswirken, und Änderungen bei der Herstellungstechnologie können sich die Anforderungen zwischen zwei Design-Durchläufen ändern.

Das erfindungsgemäße Verfahren, das in Fig. 2 gezeigt ist, beginnt mit der Simulation des drahtlosen Systems und führt am Ende zu einem arbeitsfähigen Prototyp. Es zeigt die Probleme bereits in der Stufe der Gestaltung des Algorithmus und gibt dem Gestalter die Möglichkeit, einen Prototypen schrittweise auf einer flexiblen und skalierbaren Hardware-Plattform zu konzipieren und zu realisieren.

Der erste Schritt ermöglicht es dem Gestalter, simulierte Signale über eine Luftschnittstelle zu übertragen, diese zu empfangen und sie zur Simulationsumgebung (dem Simulationsrechner) zurückzuführen. Das ist in Fig. 2b dargestellt. Für derartige Simulationen können graphische Design-Tools wie "Matlab", SIMULINK" oder "CoCentric System Studio", welche für diesen Einsatz eine große Flexibilität bieten, verwendet werden.

Im nächsten Schritt werden mehr und mehr Teile des Algorithmus, mehr und mehr physische Ebenen (PHY = Physical Layer), des kompletten drahtlosen Systems auf den Prototypen der Hardware übertragen. Schließlich resultiert daraus ein voll arbeitsfähiger Prototyp. Alle Basisband-Algorithmen sind auf der Hardware-Plattform implementiert, wie dies in Fig. 2c dargestellt ist. Somit wird ein umfassender Konzeptnachweis des drahtlosen Kommunikationssystems zu einer frühen Phase des Designablaufs möglich.

Der Designer kann somit Probleme oder Fehler, welche ihre Ursache in realen Übertragungsbedingungen haben, wie beispielsweise Kanalübertragungsfehler, HF-Beeinträchtigungen und Beeinträchtigungen im realen Übertragungskanal bereits in einer sehr frühen Stufe des Designablaufs erkennen und beseitigen.

Die erfindungsgemäße Hardware-Plattform ist so flexibel wie möglich gestaltet, um dem System-Gestalter eine große Zahl von Freiheitsgraden zur Verfügung zu stellen. Der Transmitter 1 besteht aus folgenden Teilen:
- Hochfrequenzverstärker 4 (RF-Power Amplifier (PA))
- Modulator 5
- D/A-Umsetzer 6
- Digital-Signal-Verarbeitungs-Hardware 7
- Speicher 8 und
- Interfaces 9 zum Programmieren und zur Datenspeicherung

Der Receiver 2 besteht aus folgenden Teilen:
- rauscharmer Hochfrequenzverstärker 10 (RF-Low Noise Amplifier (LNA))
- Demodulator 11
- A/D-Umsetzer 12
- Digital-Signal-Verarbeitungs-Hardware 7
- Speicher 8 und
- Interfaces 9 zum Programmieren und zur Datenspeicherung

Die erfindungsgemäße Anordnung in Form einer Hardware-Plattform ist mit einer Standard-Computer-Hardware 13 verbunden, die die Simulation von drahtlosen Kommunikationssystemen, in der Simulationsumgebung 3 ermöglicht. Die Standard-Interfaces 9, wie USB oder Firewire, erlauben die Kommunikation zwischen der Hardware-Plattform und der Computer-Simulationsumgebung 3.

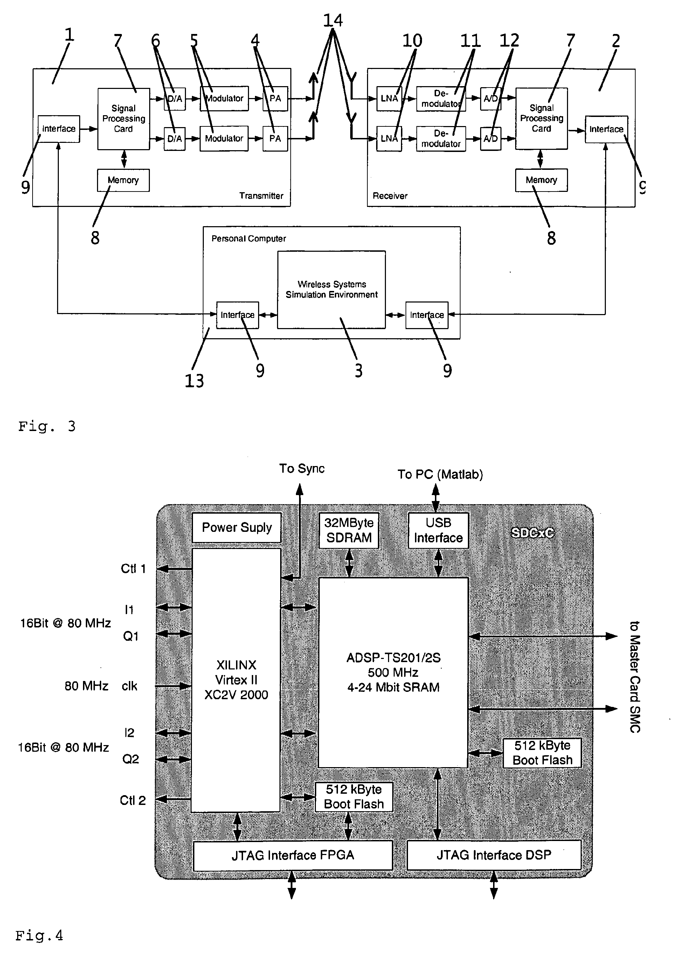

Fig. 3 zeigt den Aufbau der Hardware-Plattform zusammen mit einem Personal Computer als Standard-Computer-Hardware 13 der die Simulation vornimmt. Die Digital-Signal-Verarbeitungs-Hardware 7 kann entweder aus DSPs, FPGAs, ASICs, Microcontroller oder irgendeiner Kombination dieser Elemente bestehen.

Die Systemarchitektur stellt eine skalierbare Lösung dar, die die Anordnung mehrerer Antennen 14 am Transmitter 1 und am Receiver 2 erlaubt.

Der Aufbau der digitalen Signal-Verarbeitungs-Hardware 7 ist je nach Anspruch oder Verwendungszweck verschieden. Eine vorteilhafte Lösung besteht in der Verbindung eines FPGAs und eines DSPs zur Signalverarbeitung. Bei einer auf dieses Konzept abgestimmten Programmierung der Simulation werden die Vorteile beider Systeme optimal genutzt. Diese Vorteile bestehen beispielsweise bei einem FPGA in einem hohen Datendurchsatz bei einer Bit für Bit- oder Wort für Wort-Verarbeitung und bei einem DSP in der Eignung für verzweigte Algorithmen und eine Block-Verarbeitung von Daten.

Ein Beispiel einer Erfindungsgemäßen Lösung besteht aus der Kombination eines XILINX FPGAs und eines TigerSHAC DSPs von Analog Devices Inc.. Die parallelen Datenverarbeitung erfolgt nach dem SIMD-Prinzip (SIMD = Single Instruction Multiple Data) und ermöglicht eine Verarbeitungsleistung von bis zu 4,8 GMACS/s bei einem Kerntakt von 600 MHz. Weitere Eigenschaften dieser Lösung sind:
- 24 MBit interner on-chip DRAM
- 14-channel DMA (Direct Memory access) Kontroller
- integrierter SDRAM- Kontroller und
- Multiprozessor-Fähigkeit

Somit ist eine derartige DSP-Lösung sehr gut für eine drahtlose Kommunikations-Hardware-Plattform geeignet, da sie eine ausreichende Prozessorleistung bietet und für eine derartige Lösung eine große Auswahl von schnellen Compilerlösungen und Tools für Kommunikations-Algorithmen, unter anderen auch FFT, Filter-Tools und Viterbi-Decoder, zur Verfügung stehen.

Ein weiterer Grund für die Nutzung eines derartigen DSPs ist seine schnelle Interkommunikation und die Multiprozessor-Fähigkeit, bis zu vier bidirektionale Ports sowie die Fähigkeit im DMA-Mode ohne Leistungsminderung für den Prozessorkern zu arbeiten. Die Ports arbeiten nach einem DDR-Mode und übertragen bis zu 500 Mbyte/s pro Port und Übertragungsrichtung. Die sich über alle Verbindungsanschlüsse ergebende I/O-Bandbreite ergibt eine, für drahtlose Kommunikationssysteme ausreichende Datenübertragungsrate von bis zu 4Gbyte/s.

FPGA-Hersteller bieten Lösungen zum integrieren dieser Verbindungsanschlüsse in ihre Chips, welche ein schnelles Zusammenarbeiten des FPGAs und des DSPs ermöglichen.

Eine erfindungsgemäße Lösung ist in der Figur 4, einer Dual Channel Card (SDCxC), gezeigt. Diese Karte unterstützt die Verarbeitungs-Anforderungen auf dem Physical-Layer eines drahtlosen Modems. Alle Signalpfade sind bidirektional ausgeführt, somit kann dieselbe Karte entweder im Sender-oder im Empfängerteil der Simulationshardware eingesetzt werden. Die Kapazität des FPGA kann nach der Komplexität des Modems gestaffelt sein. Diese Karte erlaubt entweder die Implementierung von zwei Sendern, zwei Empfängern oder einem Sender und einem Empfänger (für bidirektionale Übertragung). Weiterhin wird ein Interface zu einer RF-Karte (SRFC-Tx, SRFC-Rx) angeboten.

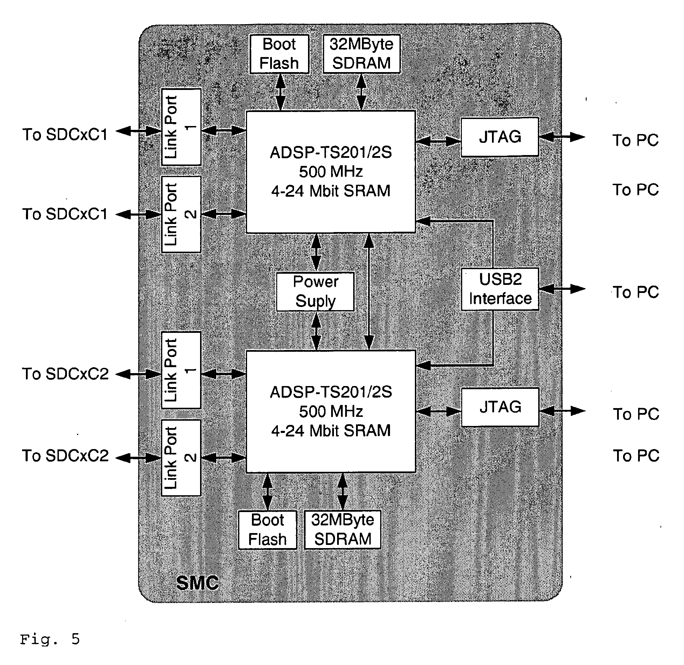

Eine weitere erfindungsgemäße Lösung ist in Fig. 5, einer Master Card (SMC), gezeigt. Diese Karte bietet zusätzliche Prozessor-Leistung für hochentwickelte Simulations-Algorithmen (zum Beispiel für MIMO-Systeme), Ausführungen von höheren Layer-Funktionalitäten oder Daten-Vorverarbeitungsprozessen. Diese ist mit der SDCxC über Link-Ports verbunden, welche einen schnellen Daten-Transfer in beide Richtungen ermöglichen. Ebenso wie die SDCxC bietet der SMC bidirektionale Signalpfade.

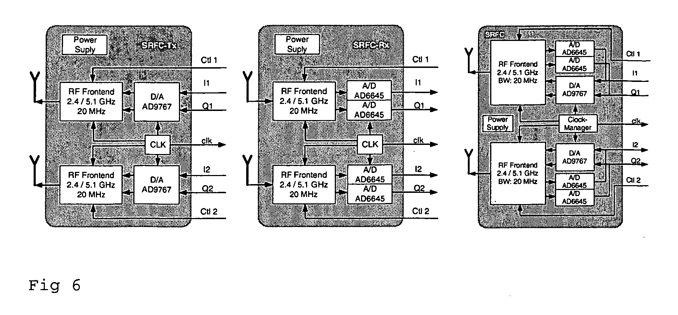

Zur Digital zu Analog Wandlung, zur Analog zu Digital Wandlung sowie für die Hochrequenzteile (HF-Transmitter/Receiver) der Simulationshardware wird eine Kombination aus einer Senderbaugruppe (SRFC-Tx = Radio Frequency Transmitter Card) und einer Empfängerbaugruppe (SRFC-Rx = Radio Frequency Receiver Card) verwendet. Die in Fig. 6 dargestellten Sender-/Empfängerbaugruppen beinhalten jeweils die A/D- oder D/A-Wandlung sowie den Radiofrequenzteil. Die Darstellung in Fig. 6 zeigt jeweils zwei Sende- und Empfangskanäle.

Die Leistungsfähigkeit des erfindungsgemäßen Verfahrens ist von der Datenübertragungsrate zwischen der Softwaresimulation und der Simulationshardware abhängig. Daher wird durch das Verfahren sowohl ein schnelles als auch ein leicht zu bedienendes und zu konfigurierendes Interface zur Verfügung gestellt. Moderne Baugruppen wie FPGAs und DSPs können nach dem JTAG-Standard programmiert werden. Daher sind die erfindungsgemäßen Signalprozessorkarten (SDCxC und SMC) mit einem JTAG-Interface ausgestattet. Da die Datenübertragungsrate dieser Schnittstelle begrenzt ist wird für eine schnelle Datenübertragung vom Personal Computer zur Simulationshardware und umgekehrt eine weitere Schnittstelle 9 benötigt. Diese ist beispielsweise über PCI oder ein VME paralleles Businterface mit einer hohen Bandbreite für die Datenübertragung realisierbar.

Personal Computer verfügen über Standardschnittstellen 9 wie USB 2.0 und/oder Firewire, welche bei einer mittleren Entfernung der Datenübertragung eine ausreichende Datenübertragungsgeschwindigkeit aufweisen. Daher sind die erfindungsgemäßen Signalprozessorkarten (SDCxC und SMC) ebenfalls mit einem USB 2.0- oder Firewire-Interface ausgestattet. Die USB Schnittstelle ermöglicht beispielsweise eine Datenübertragungsrate bis zu 480 Mbit/s. Die USB-Schnittstelle kann auch die Verbindung zwischen der Simulationshardware und der Simulationssoftware 3 (z. B. Matlab) herstellen.

Neben diesen Funktionen für die Datenübertragung innerhalb der Simulationsumgebung 3 können in dem erfindungsgemäßen Verfahren weitere Entwicklungswerkzeuge (Tools) innerhalb der Simulation mit Matlab und SIMULINK verwendet werden. Diese Tools ermöglichen den Entwickler das Erkennen und Verändern der Kommunikations-Algorithmen der Simulations-Plattform. So kann der Entwickler beispielsweise einen Einfluss auf Anfangs-/Einstellungsoptionen, die Frequenz- und Zeitsynchronisation, die Signalfolge-Struktur, die A/D- und D/A-Wandlung sowie die Abtastrate bei der Wandlung nehmen.

Eine wachsende zahl von Standard-Kommunikations-Algorithmen stehen ebenfalls zur Nutzung auf der schnellen Simulations-Plattform zur Verfügung, beispielsweise die Umsetzung von Standard-Modems. Eine Grundlage für derartige Algorithmen-Werkzeuge bildet der "Xilinx System Generator", welcher die Simulation einiger DSP-Funktionen unter Simulink und das Übertragen und Gestalten der Struktur direkt einen entsprechenden FPGA-Chip ermöglicht. Dieses Tool basiert auf VHDL-Makros welche für eine FPGA-Programmierung ausgelegt sind und ermöglichen eine effizientes FPGA-Design. Gegenwärtig sind immer mehr Tools zur Abbildung von DSP-Funktionalitäten, die unter dem Xilinx-System lauffähig sind, erhältlich.

### Bezugszeichenliste

- 1: Transmitter
- 2: Receiver
- 3: Simulationsumgebung
- 4: Hochfrequenzverstärker (RF-Power Amplifier (PA))
- 5: Modulator
- 6: D/A-Umsetzer
- 7: Digital-Signal-Verarbeitungs-Hardware
- 8: Speicher
- 9: Interface
- 10: rauscharmer Hochfrequenzverstärker (RF-Low Noise Amplifier (LNA))
- 11: Demodulator
- 12: A/D-Umsetzer
- 13: Standard-Computer-Hardware
- 14: Antenne

## Patentansprüche

1. Anordnung zum Testen von Komponenten eines drahtlosen Kommunikationssystems mit einer Standard-Computer-Hardware und einer Teststrecke, **dadurch gekennzeichnet, dass** die Teststrecke einen Transmitter (1) und einen Receiver (2) umfasst, die als elektronische Schaltungen ausgebildet und drahtlos miteinander kommunizierend verbunden sind und die mit Interfaces (9) versehen sind, dass die Standard-Computer-Hardware (13) als Personal Computer mit Standardinterfaces ausgebildet ist und dass das Interface (9) des Transmitters (1) und das Interface (9) des Receivers (2) mit den Standardinterfaces verbunden sind.

2. Anordnung nach Anspruch 1, **dadurch gekennzeichnet, dass** der Transmitter (1) ein Interface (9), eine Signalverarbeitungseinheit (7) mit einem Speicher (8) und mindestens Elemente für einen Sende/Empfangskanal bestehend aus Digital/Analog-Umsetzer (6), Modulator (5), Verstärker (4) und Antenne (14) und der Receiver (2) ein Interface (9), eine Signalverarbeitungseinheit (7) mit einem Speicher (8) und mindestens Elemente für einen Sende/Empfangskanal bestehend aus Antenne (14), Verstärker (10), Demodulator (11) und Analog/Digital-Umsetzer (12) aufweist.

3. Anordnung nach Anspruch 1 oder 2, **dadurch gekennzeichnet, dass** Transmitter (1) und Receiver (2) über mindestens zwei Sende/Empfangskanäle kommunizierbar ausgebildet sind.

4. Anordnung nach einem der Ansprüche 1 bis 3, **dadurch gekennzeichnet, dass** die Signalverarbeitungseinheit (7) des Transmitters (1) und/oder die Signalverarbeitungseinheit (7) des Receivers (2) eine frei programmierbare Logik enthält.

5. Anordnung nach einem der Ansprüchen 1 bis 4, **dadurch gekennzeichnet, dass** die Signalverarbeitungseinheit (7) des Transmitters (1) und/oder die Signalverarbeitungseinheit (7) des Receivers (2) einen digitalen Signalprozessor enthält.

6. Anordnung nach einem der Ansprüchen 1 bis 5, **dadurch gekennzeichnet, dass** die Signalverarbeitungseinheit (7) des Transmitters (1) und/oder die Signalverarbeitungseinheit (7) des Receivers (2) einen Mikroprozessor enthält.

7. Anordnung nach einem der Ansprüchen 1 bis 6, **dadurch gekennzeichnet, dass** die Signalverarbeitungseinheit (7) des Transmitters (1) und/oder die Signalverarbeitungseinheit (7) des Receivers (2) einen ASIC enthält.

8. Anordnung nach einem der Ansprüchen 1 bis 7, **dadurch gekennzeichnet, dass** Transmitter (1) und Receiver (2) auf je einer oder mehrerer separaten Leiterplatten angeordnet sind.

9. Anordnung nach einem der Ansprüchen 1 bis 7, **dadurch gekennzeichnet, dass** Transmitter (1) und Receiver (2) auf einer gemeinsamen Leiterplatte angeordnet sind.

10. Verfahren zum Testen von Komponenten eines drahtlosen Kommunikationssystems, bei dem Daten über eine Teststrecke gesendet und empfangen werden und aus den empfangenen Daten im Vergleich zu den gesendeten Daten mittels eines Simulationsrechners ein Testergebnis ermittelt wird, **dadurch gekennzeichnet, dass** von der Standard-Computer-Hardware (13) die zu sendenden Daten generiert und aus diesen mittels eines Transmitters (1) Sendesignale erzeugt werden, die über eine atmosphärische Übertragungsstrecke gesendet und mittels eines Receivers (2) als Empfangssignale empfangen und der Standard-Computer-Hardware (13) als empfangene Daten übergeben werden.

11. Verfahren nach Anspruch 10, **dadurch gekennzeichnet, dass** die zu testenden Komponenten zumindest teilweise in der Standard-Computer-Hardware (13) simuliert werden.

12. Verfahren nach Anspruch 10 oder 11, **dadurch gekennzeichnet, dass** die Komponenten zumindest teilweise in dem Transmitter (1) und/oder in dem Receiver (2) simuliert werden.

13. Verfahren nach einem der Ansprüche 10 bis 12, **dadurch gekennzeichnet, dass** ein Personal Computer als Standard-Computer-Hardware (13) eingesetzt wird, dessen Standardinterfaces von dem Personal Computer derart getrieben werden, dass ein Datenaustausch zwischen Transmitter (1) und Personal Computer und zwischen Receiver (2) und Personal Computer über diese Standardschnittstellen erfolgt.
